# FASCICULE DE BREVET EUROPEEN

(11) **EP 3 823 492 B1**
(45) Date de publication et mention de la délivrance du brevet: **26.08.2026**
(21) Numéro de dépôt: 19740352.0
(22) Date de dépôt: 12.07.2019
(51) Int. Cl.: A45D 34/02, A45D 34/00

(54) **FLACON DE PARFUM**
PARFUMFLASCHE
PERFUME BOTTLE

(30) Priorité: 16.07.2018 CH 8742018
(43) Date de publication de la demande: 26.05.2021
(73) Titulaire: Bulgari Global Operations SA, 2000 Neuchâtel (CH)
(72) Inventeur: POITRINE, Jean-Christophe, 2034 Peseux (CH)
(74) Mandataire: Moinas & Savoye SARL
(86) Numéro de dépôt international: PCT/EP2019/068833
(87) Numéro de publication internationale: WO 2020/016130

(56) Documents cités:
- WO-A1-02/094666
- WO-A1-2010/131822
- WO-A1-2014/044669
- WO-A1-2018/025167
- CN-U- 204 218 235
- US-A1- 2010 320 213

## Description

L'invention concerne un flacon de parfum comprenant une enceinte destinée à contenir un fluide.

Dans le domaine de la parfumerie, l'aspect esthétique des flacons de parfum est important. Les flacons de parfum habituellement utilisés sont constitués d'une enceinte présentant un volume interne de forme plutôt simple, par exemple à base de tout ou partie d'une sphère, d'un cylindre, d'un parallélépipède, ou d'un cube.

Une solution pour fabriquer de tels flacons consiste à fabriquer une ébauche, par exemple par pressage de la paraison avec un poinçon, avant le soufflage de l'ébauche, en verre ou plastique, pour lui donner sa forme définitive dans un moule finisseur. En variante, un flacon peut être réalisé en deux demi-coques distinctes assemblées par un collage. Dans tous les cas, les procédés de fabrication de flacons de parfum et les flacons de parfum résultants présentent des inconvénients. En particulier, ces flacons de parfum présentent toujours des formes relativement simples, et leur aspect esthétique est ainsi limité.

Les documents WO 2014/044669 A1, WO 02/094666 A1, WO 2018/025167 A1 et WO 2010/131822 A1 font partie de l'état de la technique.

Le but de l'invention est de fournir un flacon de parfum remédiant aux inconvénients de l'état de la technique.

Plus précisément, l'objet de l'invention est de proposer un flacon de parfum présentant un aspect esthétique très attractif.

A cet effet, l'invention repose sur un flacon de parfum comprenant une enceinte centrale délimitée par une paroi externe, destinée à contenir un fluide, notamment de parfumerie, le flacon de parfum comprenant une structure décorative agencée autour de la paroi externe de l'enceinte centrale, l'enceinte centrale et la structure décorative formant une pièce monobloc, et la structure décorative étant aussi destinée à contenir un fluide. La structure décorative peut former des conduits creux reliés à l'enceinte centrale et destinés à contenir aussi du parfum.

L'invention est définie par les revendications.

Ces objets, caractéristiques et avantages de la présente invention seront exposés en détail dans la description suivante de modes de réalisation particuliers faits à titre non-limitatif en relation avec les figures jointes parmi lesquelles :
Les figures 1a et 1b représentent de façon schématique un flacon de parfum selon un premier mode de réalisation de l'invention, respectivement en vue de face en coupe par un plan médian vertical et en vue de dessus.
Les figures 2a et 2b représentent des vues en perspective de dessus d'un flacon de parfum selon un deuxième mode de réalisation de l'invention, respectivement en configurations ouverte et fermée.
Les figures 2c et 2d représentent des vues de côté du flacon de parfum selon le deuxième mode de réalisation de l'invention, respectivement en configurations ouverte et fermée.
La figure 2e représente une vue de côté en coupe par un plan médian vertical du flacon de parfum selon le deuxième mode de réalisation de l'invention.
Les figures 2f et 2g représentent respectivement des vues de dessus et de dessous du flacon de parfum selon le deuxième mode de réalisation de l'invention.
La figure 3a représente une vue en perspective de dessus d'un flacon de parfum en configuration fermée selon un troisième mode de réalisation de l'invention.
La figure 3b représente une vue de côté du flacon de parfum en configuration fermée selon le troisième mode de réalisation de l'invention.
La figure 3c représente une vue de côté en coupe par un plan médian vertical du flacon de parfum selon le troisième mode de réalisation de l'invention.
Les figures 3d et 3e représentent respectivement des vues de dessus et de dessous du flacon de parfum selon le troisième mode de réalisation de l'invention.
Les figures 4a et 4b représentent des vues en perspective de dessus d'un flacon de parfum en configuration fermée selon un quatrième mode de réalisation de l'invention.
La figure 4c représente une vue de côté du flacon de parfum en configuration fermée selon le quatrième mode de réalisation de l'invention.
La figure 4d représente une vue de côté en coupe par un plan médian vertical du flacon de parfum selon le quatrième mode de réalisation de l'invention.
Les figures 4e et 4f représentent respectivement des vues de dessus et de dessous du flacon de parfum selon le quatrième mode de réalisation de l'invention.

Pour des raisons de simplification de la lecture, les mêmes références seront utilisées dans les différents modes de réalisation de l'invention pour les mêmes éléments ou des éléments similaires ou équivalents.

De plus, nous définirons un plan horizontal par le plan sur lequel le flacon de parfum est destiné à reposer. La direction verticale sera la direction perpendiculaire au plan horizontal, orientée vers le haut.

L'invention repose sur un flacon de parfum comprenant d'abord une enceinte centrale, principalement destinée à contenir un fluide comme du parfum et un mécanisme de distribution permettant l'éjection du fluide vers l'extérieur. L'invention repose ensuite sur un flacon de parfum comprenant une structure décorative, agencée autour de l'enceinte centrale. Selon le mode de réalisation de l'invention, la structure décorative et l'enceinte centrale forment un ensemble monobloc. Cet ensemble forme donc une seule et même pièce, unitaire. Cet ensemble monobloc est de préférence formé par impression 3D. Comme cela va être illustré plus en détail par les différents modes de réalisation, cette approche de l'invention permet la réalisation de flacons de parfum de formes complexes, offrant un nouvel horizon pour la définition de flacons d'aspects esthétiques nouveaux.

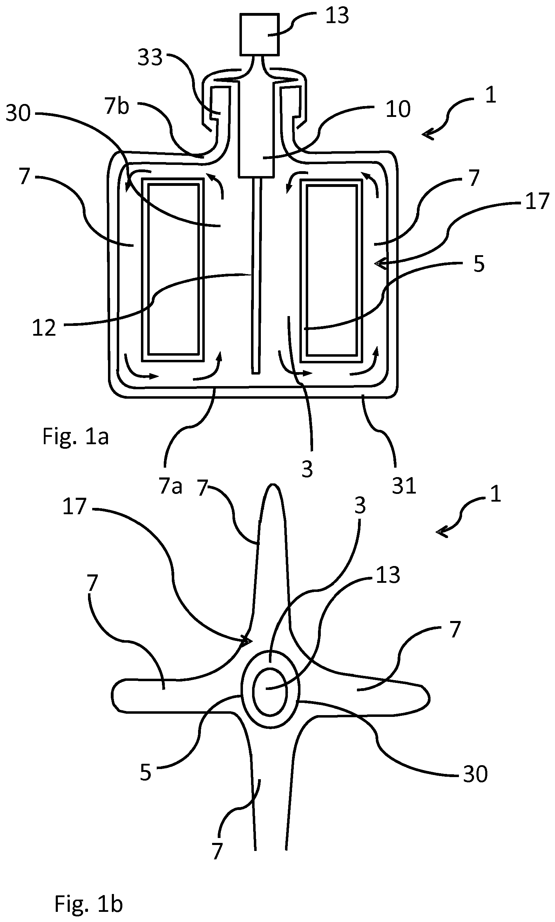

Un premier mode de réalisation d'un flacon de parfum 1 est décrit ci-après en référence aux figures 1a et 1b.

Le flacon de parfum 1 comprend une enceinte 3 centrale. L'enceinte 3 est destinée à contenir un fluide, notamment un fluide de parfumerie, de préférence sous forme liquide, par exemple du parfum. Le flacon de parfum 1 comprend en outre aussi au moins un conduit 7 ; selon ce mode de réalisation, il comprend quatre conduits 7. Ces conduits 7 sont agencés autour de l'enceinte 3 centrale et forment une structure décorative 17. L'enceinte 3 et la structure décorative 17 du flacon de parfum 1 forment une pièce monobloc. L'enceinte 3 et la structure décorative 17 sont de préférence en un même matériau.

L'enceinte 3 centrale comprend une base 31, sous la forme d'une surface inférieure, qui peut être plane et horizontale ou courbée, par exemple convexe, destinée au positionnement stable du flacon de parfum. L'enceinte 3 centrale comprend de plus un col 33 agencé au niveau de sa surface supérieure. L'enceinte 3 centrale comprend ensuite une paroi externe 5 s'étendant depuis la base 31 jusqu'au col 33. Cette enceinte 3 centrale définit un volume central 30 destiné à stocker le parfum. Selon cet exemple de réalisation, le flacon de parfum 1 présente la forme d'un corail, comme cela apparaît particulièrement sur la figure 1b. Par « paroi externe » de l'enceinte 3 centrale, on entend la surface s'étendant sur le pourtour externe du volume central 30, délimitant ce volume.

La forme en corail est formée par les quatre conduits 7 régulièrement agencés sur le pourtour de l'enceinte 3 centrale. Chaque conduit 7 comprend une première extrémité 7a raccordée à l'enceinte 3 dans sa partie inférieure, au niveau de la base 31, et une deuxième extrémité 7b raccordée à l'enceinte 3 dans sa partie supérieure, de préférence dans la moitié supérieure, et juste en-dessous du col 33 selon ce mode de réalisation. Ces raccords ou liaisons d'un conduit sont plus précisément agencés par des ouvertures dans la paroi externe 5 de l'enceinte 3 centrale. Dans ce mode de réalisation, les conduits 7 sont creux. Les conduits 7 sont prévus pour contenir du parfum, en complément de l'enceinte 3 centrale. Les deux liaisons de chaque conduit 7 avec l'enceinte 3 centrale permettent de former une boucle, qui garantit que le parfum présent dans un conduit 7 n'y restera pas piégé, mais pourra rejoindre l'enceinte 3 centrale d'où il pourra être éjecté vers l'extérieur. En remarque, un tel agencement permet de déporter une partie du volume de stockage dans les conduits 7, donc en dehors de l'enceinte 3 centrale, qui peut présenter un volume restreint.

Les conduits 7 creux ainsi formés, outre leur fonction de contenant de parfum, remplissent une deuxième fonction de décoration : l'ensemble de ces conduits périphériques forme ainsi une structure décorative.

Le flacon de parfum 1 comprend en outre une pompe 10, par exemple une pompe habituellement utilisée pour les flacons de parfum. La pompe 10 comprend un tube plongeur 12, disposé dans l'enceinte 3 centrale. Le flacon de parfum 1 comprend également un bouton poussoir 13. Ce dispositif permet ainsi de manière conventionnelle de mettre en œuvre la distribution de parfum à l'extérieur du flacon de parfum.

Naturellement, l'invention ne se limite pas à la réalisation spécifique illustrée. Chaque conduit pourrait en effet comprendre toute autre forme, longueur, diamètre, etc. Les extrémités de ces conduits pourraient être liées différemment à l'enceinte centrale, à toute hauteur différente. De préférence, les deux extrémités d'un conduit sont raccordées à l'enceinte centrale à des hauteurs différentes, pour favoriser l'écoulement par gravitation du parfum contenu dans le conduit. Il peut de plus y avoir tout autre nombre de conduits. Ces conduits peuvent être agencés selon tout autre modèle autour de l'enceinte centrale. Il apparaît ainsi que cette approche permet d'imaginer une infinité de formes de nouveaux flacons de parfum, et démultiplie donc les possibilités de produire des nouveaux aspects esthétiques.

Dans de nombreux cas, cette approche selon le premier mode de réalisation de l'invention permet d'imaginer un flacon de parfum 1 qui présente une structure en réseau, permettant une circulation du fluide, notamment entre la partie base 31 et un col 33 en partie haute de l'enceinte 3 centrale, par une ou des connexions formées par au moins un conduit 7. De l'air peut ainsi circuler dans le réseau afin d'équilibrer la pression interne avec la pression externe. Le flacon de parfum 1 peut alors se remplir et se vider. Par « structure en réseau », on entend une structure permettant une circulation complète, autrement dit non obstruée, du parfum.

Le flacon de parfum 1 comprend donc un système de circulation du fluide depuis la base 31 de l'enceinte 3 par des conduits 7 externes à l'enceinte 3, qui se reconnectent dans une partie plus haute, par exemple la partie haute de l'enceinte 3 au niveau de la hauteur de remplissage, en dessous du col 33. L'ensemble formé par l'enceinte 3 et l'au moins un conduit 7 est destiné à être rempli par le fluide à la contenance recherchée. Grâce à la structure en réseau du flacon de parfum 1, le fluide peut entrer librement dans l'au moins un conduit 7 et en ressortir quand on vide le flacon de parfum 1.

Le flacon de parfum 1 peut comprendre une enceinte 3 ou tronc central présentant une capacité ou contenance réduite, c'est-à-dire bien inférieure à la capacité ou contenance déclarée du flacon de parfum, et des conduits 7 externes servant à l'esthétisme du flacon de parfum et permettant d'obtenir la contenance désirée par leurs contenances propres. La structure décorative formée des conduits 7 peut être destinée, comme l'enceinte 3, à contenir ledit fluide. L'enceinte 3 a une première contenance et chaque conduit 7 a une deuxième contenance, la somme des première et deuxième contenances correspondant à la contenance déclarée du flacon de parfum 1. L'enceinte 3 peut présenter une forme sensiblement cylindrique, de diamètre réduit. Selon une réalisation, le diamètre de l'enceinte 3 sera par exemple choisi de sorte à ne laisser passer que le tube plongeur 12 de la pompe 10 avec un jeu minimal, les conduits formant alors un volume important.

L'enceinte 3 et la structure décorative 17 sont par exemple fabriquées par impression 3D. Une telle technique permet d'obtenir une pièce monobloc comprenant à la fois l'enceinte 3 et la structure décorative 17 (conduits 7).

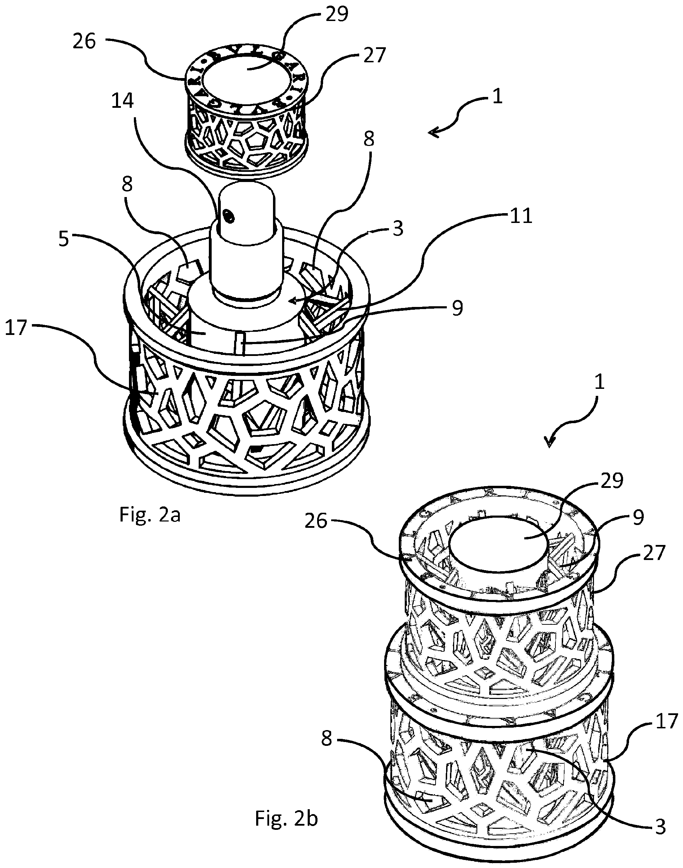

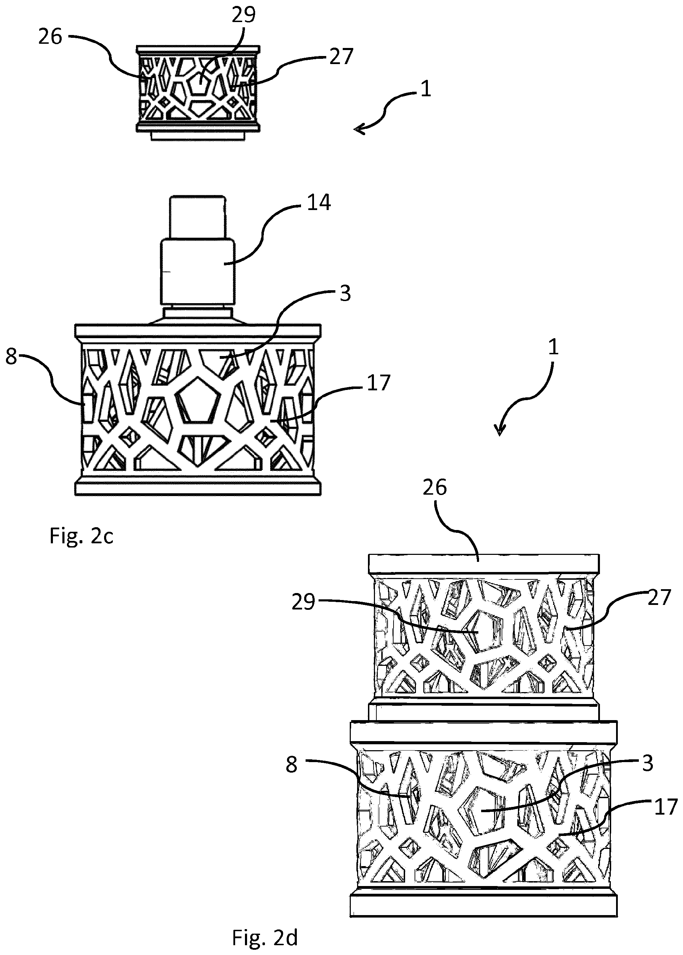

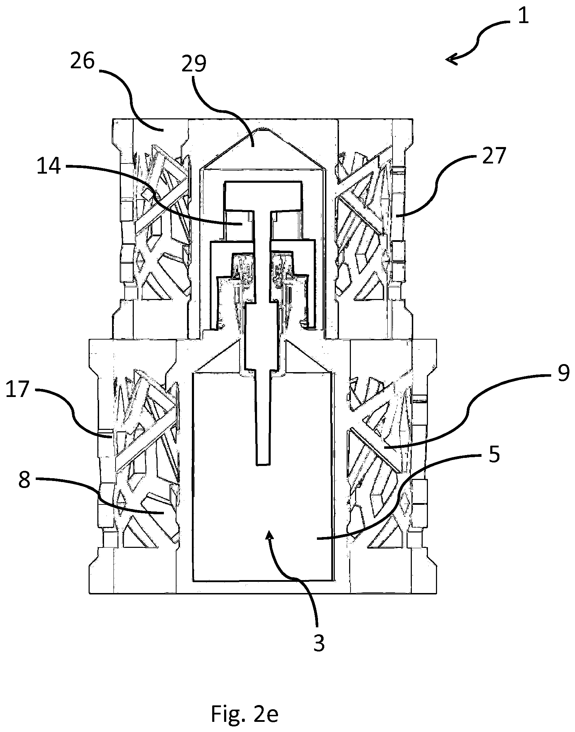

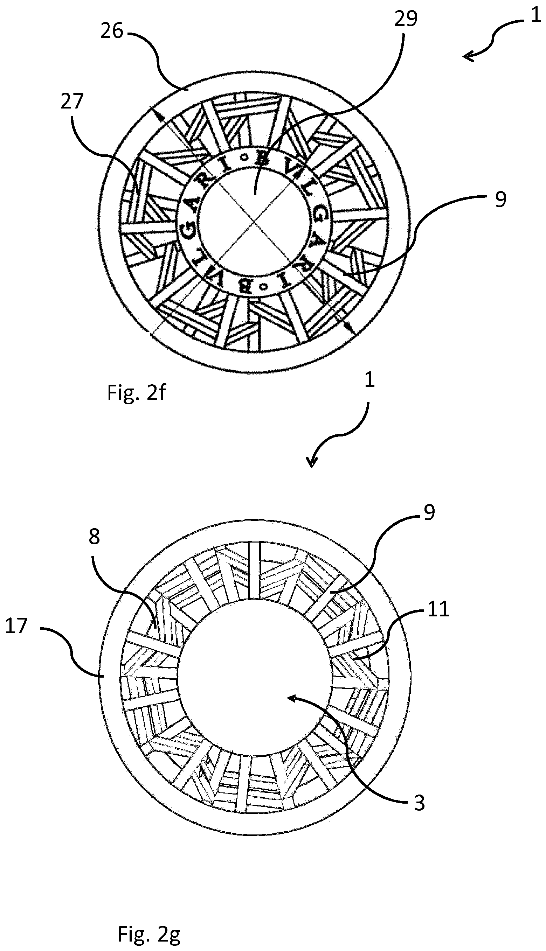

Les figures 2a à 2g représentent un flacon de parfum selon un deuxième mode de réalisation de l'invention.

Le flacon de parfum 1 selon ce deuxième mode de réalisation comprend une enceinte 3 et une structure décorative 17 s'étendant autour de la paroi externe 5 de l'enceinte 3 centrale. L'enceinte 3 centrale est destinée à contenir un fluide, notamment un parfum, de préférence sous forme liquide. L'enceinte 3 et la structure décorative 17 forment une pièce monobloc. L'enceinte 3 et la structure décorative 17 sont de préférence dans un même matériau.

La structure décorative 17 comporte des ouvertures 8 définissant un maillage ou une architecture alvéolaire s'étendant autour de la paroi externe 5 de l'enceinte 3. La structure décorative 17 est raccordée à la paroi externe 5 de l'enceinte 3 par des bras 9. Ces bras 9 peuvent être reliés entre eux par des pontages 11 .

Le flacon de parfum 1 peut comporter un bouchon 26 également pourvu d'une structure décorative 27 du même type que la structure décorative 17 liée à l'enceinte centrale. La structure décorative 27 du bouchon 26 peut également être raccordée à une partie centrale 29 du bouchon 26 par des bras 9, éventuellement reliés entre eux par des pontages 11.

Dans cet exemple de réalisation, la section transversale, selon un plan horizontal, du flacon de parfum 101, est de forme circulaire.

L'enceinte 3 centrale et les structures décoratives 17, 27 peuvent être en un matériau métallique. L'enceinte 3 et les structures décoratives 17, 27 sont par exemple en or ou en acier, comme un acier inox 316I, ou en titane. Le matériau est choisi pour assurer une compatibilité avec le contenant destiné à être stocké dans le flacon de parfum, c'est-à-dire un parfum.

L'enceinte 3, les structures décoratives 17, 27 et la partie centrale 29 du bouchon 26 sont par exemple fabriquées par impression 3D. Une telle technique permet d'obtenir une pièce monobloc pour l'enceinte 3 et la structure décorative 17, ainsi que pour le bouchon 26 et sa structure décorative 27 de bouchon.

Le flacon de parfum 1 comporte en outre un dispositif de vaporisation 14, disposé en partie à l'intérieur de l'enceinte 3 centrale. Le bouchon 26 est destiné à fermer le flacon de parfum 1, une fois disposé autour de la partie supérieure du dispositif de vaporisation 14.

En remarque, dans ce deuxième mode de réalisation, la structure décorative 17 a pour seule fonction la décoration. Sa présence a pour seul effet de donner un aspect esthétique à l'ensemble du flacon de parfum. Contrairement au premier mode de réalisation, cette structure décorative ne comprend pas de conduit creux pour former un volume de stockage de parfum.

Naturellement, l'invention ne se limite pas à un design particulier ou à une forme particulière du flacon.

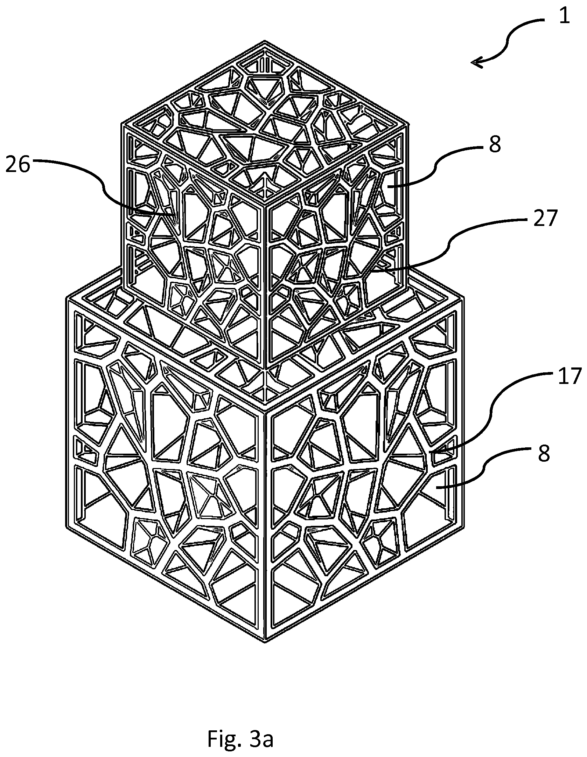

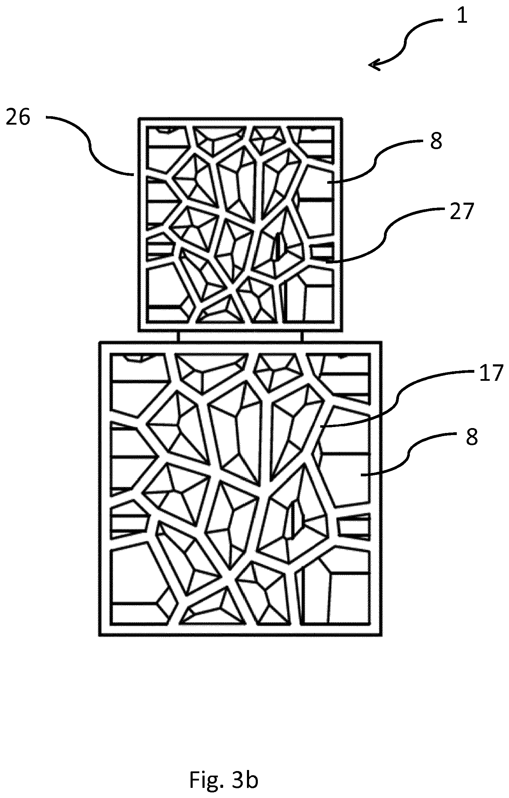

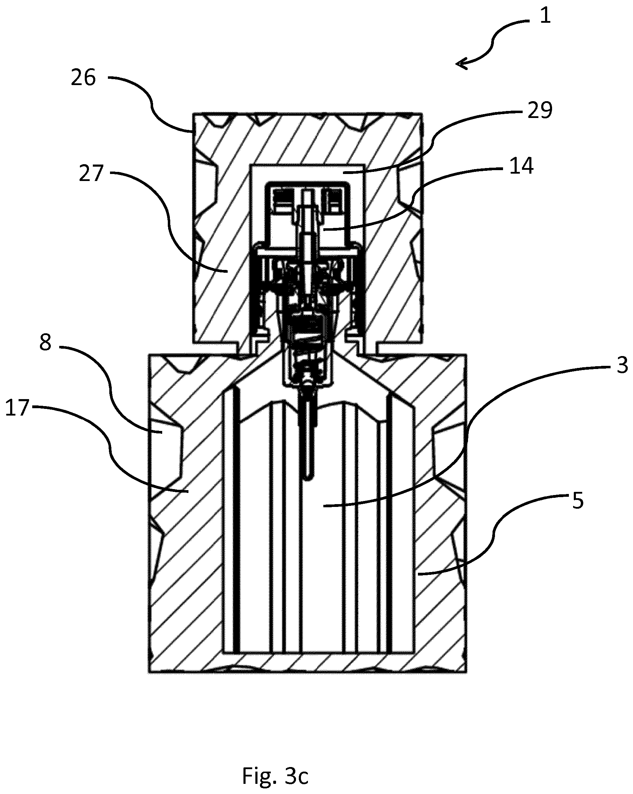

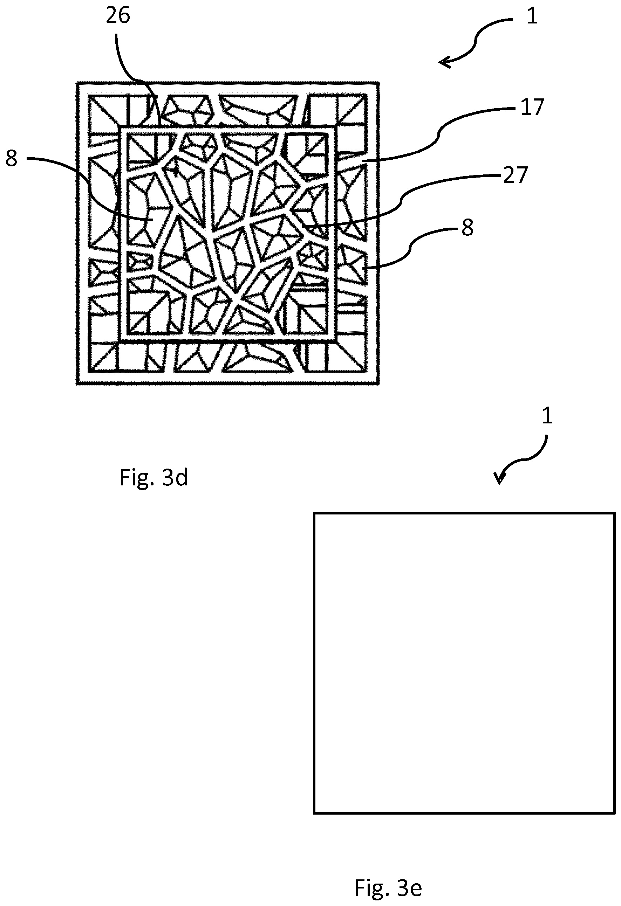

Ainsi, selon un troisième mode de réalisation similaire au deuxième mode de réalisation, représenté par les figures 3a à 3e, le flacon de parfum 1 peut se présenter globalement selon une section horizontale carrée, voire rectangulaire. Cette forme carrée est imposée par la surface extérieure de la structure décorative 17, qui est parallélépipédique. De même, la structure décorative du bouchon présente une forme semblable, plus petite, de section horizontale carrée, voire rectangulaire.

Dans ce troisième mode de réalisation, la structure décorative 17 est directement définie dans l'épaisseur de la paroi externe 5 de l'enceinte 3. Elle ne donne pas l'impression visuelle d'être raccordée à la paroi externe 5 de l'enceinte 3 par des bras comme dans le deuxième mode de réalisation, mais plutôt d'être comme sculptée dans l'épaisseur de la paroi. L'effet visuel extérieur reste similaire, la structure décorative 17 apparaît comme une structure alvéolaire.

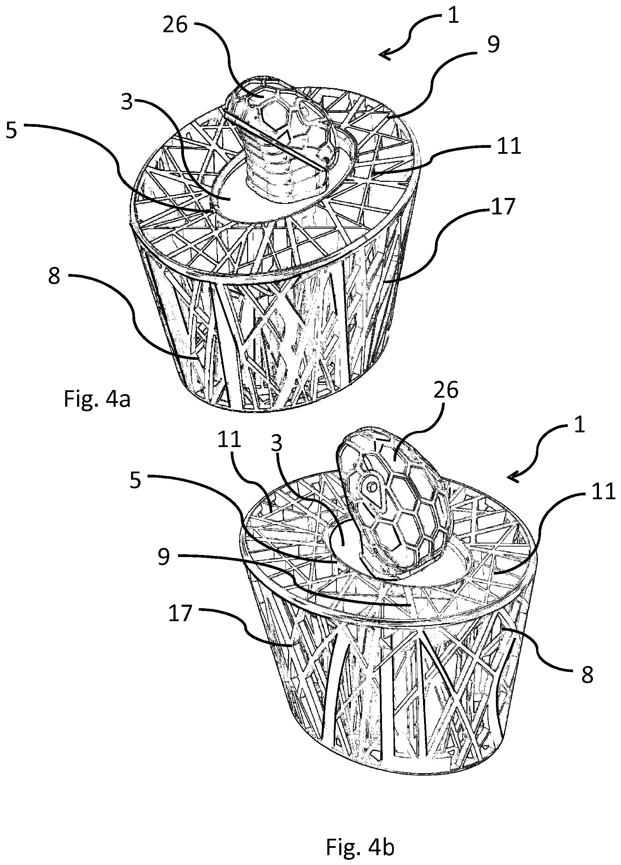

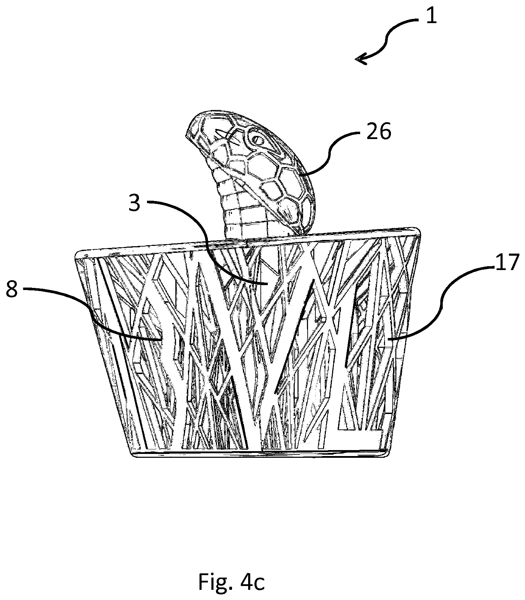

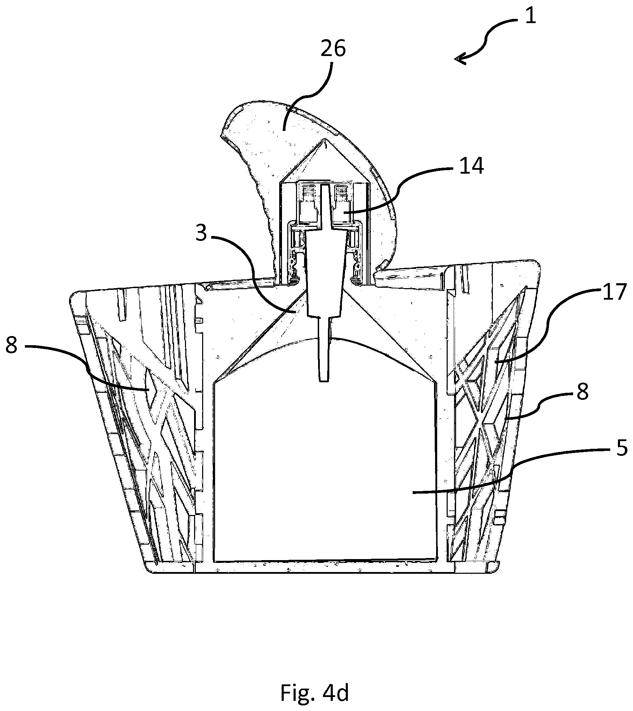

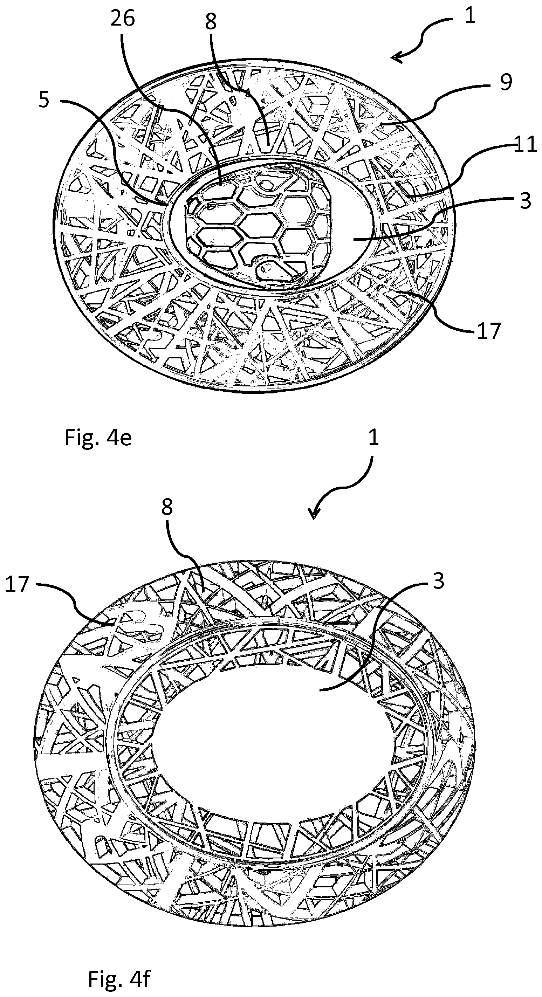

De même, les figures 4a à 4f représentent un quatrième mode de réalisation de l'invention, qui se rapproche du deuxième mode de réalisation. Le quatrième mode de réalisation de l'invention se différencie particulièrement du deuxième mode de réalisation par la forme extérieure de sa ou des ses structures décoratives, de section horizontale sensiblement elliptique.

De manière originale, dans ce quatrième mode de réalisation, le flacon de parfum 1 comporte un bouchon 26 de forme complexe, par exemple sous la forme d'une tête de serpent.

Naturellement, l'invention ne se limite pas aux modes de réalisation décrits. Il est par exemple possible de combiner les modes de réalisation entre eux. Pour cela, la structure décorative peut à la fois comprendre des conduits creux, remplissant une fonction de stockage, et des bras ou conduits non creux ou sans fonction de stockage, de simple décoration.

La structure décorative peut présenter différentes structures ou composants : elle peut comprendre des bras, des conduits, plus généralement toute combinaison d'éléments de forme allongée. Chaque élément allongé peut se trouver dans un plan vertical ou non.

De plus, les éléments allongés peuvent être regroupés dans une structure dite structure décorative formant une forme de section horizontale dont le contour extérieur peut être divers, carré, rectangulaire, ellipsoïdal, circulaire, ou autre. De même, l'enceinte centrale peut présenter toute forme, cylindrique, conique, parallélépipédique, ou autre. De plus, elle peut présenter une section horizontale extérieure de toute forme, circulaire ou non. Cette section peut avoir la même forme que la section de la structure décorative mentionnée ci-dessus ou non.

La structure décorative s'étend avantageusement sur tout le pourtour du flacon de parfum. Elle peut être agencée selon une symétrie de révolution autour de l'enceinte centrale ou de l'axe central du flacon de parfum, ou peut présenter une forme asymétrique.

La structure décorative peut être alvéolaire, ou plus généralement composée d'une pluralité d'éléments allongés, plus ou moins dense, rendant visible ou invisible la paroi externe 5 de l'enceinte centrale 3, notamment depuis une vue de côté.

De préférence, la structure décorative est inscrite dans un volume significatif du flacon de parfum considéré dans son ensemble. Elle s'étend avantageusement depuis la paroi externe 5 sur une longueur supérieure ou égale au quart, voire supérieure ou égale au tiers, voire supérieure ou égale à la moitié, de la distance entre les deux parois externes 5 opposées au niveau d'au moins une section horizontale du flacon de parfum. Elle s'étend ainsi sur au moins le tiers, voire au moins la moitié, voire au moins les trois quart de la surface externe 5 de l'enceinte 3 centrale.

Même si l'invention est particulièrement adaptée aux flacons de parfum, elle resterait applicable pour d'autres types de récipients prévus pour recevoir un fluide, de préférence liquide, à éjecter.

Un procédé de fabrication d'un flacon de parfum est décrit ci-dessus. Ce procédé comprend une étape essentielle consistant à fabriquer une pièce de base monobloc, comprenant une enceinte centrale et une structure décorative périphérique.

Cette étape essentielle peut être réalisée par une méthode d'addition de matière, par exemple par impression 3D de type frittage laser (SLM, acronyme pour fusion laser de poudres métalliques) ou de type fusion de matériaux par faisceau d'électrons (EBM).

Dans ce procédé de fabrication d'un flacon de parfum, destiné à contenir un fluide, notamment de parfumerie, une enceinte et une structure décorative s'étendent autour de la paroi externe de l'enceinte, et sont formées par addition de matière, notamment impression 3D, sous la forme d'une pièce monobloc.

Dans cette étape de fabrication, le matériau utilisé peut être un métal. A titre d'exemple de matériau, l'enceinte et la structure décorative peuvent être formées par impression 3D d'or ou d'acier (par exemple Acier 316), ou de titane.

Un avantage du procédé du type de celui décrit ci-dessus réside dans le fait qu'il permet de fabriquer un flacon de parfum comportant une structure décorative de forme complexe, telle que décrite précédemment.

## Revendications

1. Flacon de parfum (1) comprenant une enceinte (3) centrale délimitée par une paroi externe (5), destinée à contenir un fluide, notamment de parfumerie, le flacon de parfum (1) comprenant une structure décorative (17) agencée autour de la paroi externe (5) de l'enceinte (3) centrale, l'enceinte (3) centrale et la structure décorative (17) formant une pièce monobloc, **caractérisé en ce que** la structure décorative (17) est aussi destinée à contenir ledit fluide.

2. Flacon de parfum selon la revendication 1, **caractérisé en ce que** l'enceinte et la structure décorative sont en un même matériau, notamment un métal, notamment en acier, or ou titane.

3. Flacon de parfum selon la revendication 1 ou 2, **caractérisé en ce que** la structure décorative (17) comprend une pluralité d'éléments allongés, comme des bras ou des conduits (7), selon une densité permettant de rendre visible ou invisible la paroi externe (5) de l'enceinte (3) centrale depuis une vue de côté du flacon de parfum.

4. Flacon de parfum selon l'une des revendications précédentes, **caractérisé en ce que** la structure décorative (17) comprend au moins un conduit (7) raccordé à la paroi externe (5) de l'enceinte (3) au niveau de ses deux extrémités.

5. Flacon de parfum selon la revendication précédente, **caractérisé en ce que** l'enceinte (3) centrale comprend une base (31) et un col (33), et dans lequel une première extrémité (7a) de l'au moins un conduit (7) est raccordée à la paroi externe (5) de l'enceinte (3) centrale au niveau de la base (31) de l'enceinte (3) centrale, et dans lequel une deuxième extrémité (7b) de l'au moins un conduit (7) est raccordée à la paroi externe (5) de l'enceinte (3) centrale en partie supérieure, dans sa moitié supérieure, notamment sensiblement sous le col (33).

6. Flacon de parfum selon l'une quelconque des revendications précédentes, **caractérisé en ce que** l'enceinte (3) a une première contenance et l'au moins un conduit (7) a une deuxième contenance, la somme des première et deuxième contenances correspondant à la contenance totale du flacon de parfum.

7. Flacon de parfum selon l'une des revendications précédentes, **caractérisé en ce que** la structure décorative (17) comporte des ouvertures (8) définissant un maillage ou une structure alvéolaire.

8. Flacon de parfum selon la revendication précédente, **caractérisé en ce que** la structure décorative (17) est raccordée à la paroi externe (5) de l'enceinte (3) par des bras (9), éventuellement reliés entre eux par des pontages (11).

9. Flacon de parfum selon la revendication 7, **caractérisé en ce que** la structure décorative (17) est définie dans la paroi externe (5) de l'enceinte (3).

10. Flacon de parfum selon l'une des revendications précédentes, **caractérisé en ce que** la structure décorative (17) comprend tout ou partie des caractéristiques suivantes :
- elle s'étend avantageusement sur tout le pourtour du flacon de parfum sur tout ou partie de la hauteur du flacon de parfum ; et/ou
- elle présente une symétrie de révolution autour de l'enceinte (3) centrale ou de l'axe central du flacon de parfum, ou présente une forme asymétrique autour de l'enceinte (3) centrale ; et/ou
- elle présente une structure alvéolaire ; et/ou
- elle s'étend avantageusement dans au moins un plan horizontal depuis la paroi externe (5) de l'enceinte (3) centrale sur une longueur supérieure ou égale au quart, voire supérieure ou égale au tiers, voire supérieure ou égale à la moitié, de la distance entre les deux parois externes (5) opposées dans le prolongement de ladite longueur dans le plan horizontal considéré ; et/ou
- elle s'étend ainsi sur au moins le tiers, voire au moins la moitié, voire au moins les trois quarts de la surface externe (5) de l'enceinte (3) centrale.

## Patentansprüche

1. Parfümflasche (1), umfassend einen zentralen Behälter (3), der durch eine Außenwand (5) begrenzt wird und dazu bestimmt ist, ein Fluid, insbesondere ein Parfümfluid, aufzunehmen, wobei die Parfümflasche (1) eine dekorative Struktur (17) umfasst, die um die Außenwand (5) des zentralen Behälters (3) angeordnet ist, und wobei der zentrale Behälter (3) und die dekorative Struktur (17) ein einstückiges Bauteil bilden, **dadurch gekennzeichnet, dass** die dekorative Struktur (17) ebenfalls dazu bestimmt ist, das besagte Fluid aufzunehmen.

2. Parfümflasche nach Anspruch 1, **dadurch gekennzeichnet, dass** der Behälter und die dekorative Struktur aus demselben Material bestehen, insbesondere einem Metall, insbesondere aus Stahl, Gold oder Titan.

3. Parfümflasche nach Anspruch 1 oder 2, **dadurch gekennzeichnet, dass** die dekorative Struktur (17) eine Vielzahl von länglichen Elementen, wie Arme oder Kanäle (7), mit einer Dichte umfasst, die es ermöglicht, die Außenwand (5) des zentralen Behälters (3) in einer Seitenansicht der Parfümflasche sichtbar oder unsichtbar zu machen.

4. Parfümflasche nach einem der vorhergehenden Ansprüche, **dadurch gekennzeichnet, dass** die dekorative Struktur (17) mindestens einen Kanal (7) umfasst, der an beiden Enden mit der Außenwand (5) des Behälters (3) verbunden ist.

5. Parfümflasche nach dem vorhergehenden Anspruch, **dadurch gekennzeichnet, dass** der zentrale Behälter (3) eine Basis (31) und einen Hals (33) umfasst, und wobei ein erstes Ende (7a) des mindestens einen Kanals (7) mit der Außenwand (5) des zentralen Behälters (3) auf Höhe der Basis (31) des zentralen Behälters (3) verbunden ist, und wobei ein zweites Ende (7b) des mindestens einen Kanals (7) mit der Außenwand (5) des zentralen Behälters (3) im oberen Bereich, in seiner oberen Hälfte, insbesondere im Wesentlichen unterhalb des Halses (33), verbunden ist.

6. Parfümflasche nach einem der vorhergehenden Ansprüche, **dadurch gekennzeichnet, dass** der Behälter (3) ein erstes Fassungsvermögen und der mindestens eine Kanal (7) ein zweites Fassungsvermögen aufweist, wobei die Summe des ersten und zweiten Fassungsvermögens dem Gesamtfassungsvermögen der Parfümflasche entspricht.

7. Parfümflasche nach einem der vorhergehenden Ansprüche, **dadurch gekennzeichnet, dass** die dekorative Struktur (17) Öffnungen (8) aufweist, die ein Geflecht oder eine zelluläre bzw. wabenartige Struktur definieren.

8. Parfümflasche nach dem vorhergehenden Anspruch, **dadurch gekennzeichnet, dass** die dekorative Struktur (17) durch Arme (9), die gegebenenfalls durch Stege (11) miteinander verbunden sind, mit der Außenwand (5) des Behälters (3) verbunden ist.

9. Parfümflasche nach Anspruch 7, **dadurch gekennzeichnet, dass** die dekorative Struktur (17) in der Außenwand (5) des Behälters (3) definiert ist.

10. Parfümflasche nach einem der vorhergehenden Ansprüche, **dadurch gekennzeichnet, dass** die dekorative Struktur (17) alle oder einige der folgenden Merkmale umfasst:
- sie erstreckt sich vorteilhafterweise über den gesamten Umfang der Parfümflasche über die gesamte oder einen Teil der Höhe der Parfümflasche; und/oder
- sie weist eine Rotationssymmetrie um den zentralen Behälter (3) oder um die Mittelachse der Parfümflasche auf, oder weist eine asymmetrische Form um den zentralen Behälter (3) auf; und/oder
- sie weist eine zelluläre bzw. wabenartige Struktur auf; und/oder
- sie erstreckt sich vorteilhafterweise in mindestens einer horizontalen Ebene von der Außenwand (5) des zentralen Behälters (3) über eine Länge, die größer oder gleich einem Viertel, oder sogar größer oder gleich einem Drittel, oder sogar größer oder gleich der Hälfte des Abstands zwischen den beiden gegenüberliegenden Außenwänden (5) in der Verlängerung der besagten Länge in der betreffenden horizontalen Ebene ist; und/oder
- sie erstreckt sich auf diese Weise über mindestens ein Drittel, oder sogar mindestens die Hälfte, oder sogar mindestens drei Viertel der Außenfläche (5) des zentralen Behälters (3).

## Claims

1. A perfume bottle (1) comprising a central enclosure (3) delimited by an external wall (5), intended to contain a fluid, notably a perfumery fluid, the perfume bottle (1) comprising a decorative structure (17) arranged around the external wall (5) of the central enclosure (3), the central enclosure (3) and the decorative structure (17) forming a one-piece component, **characterized in that** the decorative structure (17) is also intended to contain said fluid.

2. The perfume bottle as claimed in claim 1, **characterized in that** the enclosure and the decorative structure are made from the one same material, notably a metal, notably from steel, gold or titanium.

3. The perfume bottle as claimed in claim 1 or 2, **characterized in that** the decorative structure (17) comprises a plurality of elongate elements, such as arms or ducts (7), with a density that allows the external wall (5) of the central enclosure (3) to be rendered visible or nonvisible when the perfume bottle is viewed from the side.

4. The perfume bottle as claimed in one of the preceding claims, **characterized in that** the decorative structure (17) comprises at least one duct (7) connected to the external wall (5) of the enclosure (3) at its two ends.

5. The perfume bottle as claimed in the preceding claim, **characterized in that** the central enclosure (3) comprises a base (31) and a neck (33), and wherein a first end (7a) of the at least one duct (7) is connected to the external wall (5) of the central enclosure (3) at the level of the base (31) of the central enclosure (3), and wherein a second end (7b) of the at least one duct (7) is connected to the external wall (5) of the central enclosure (3) in the upper part, in the upper half thereof, notably substantially below the neck (33).

6. The perfume bottle as claimed in any one of the preceding claims, **characterized in that** the enclosure (3) has a first capacity and the at least one duct (7) has a second capacity, the sum of the first and second capacities corresponding to the total capacity of the perfume bottle.

7. The perfume bottle as claimed in one of the preceding claims, **characterized in that** the decorative structure (17) comprises openings (8) defining a mesh or a cellular or honeycomb or alveolar structure.

8. The perfume bottle as claimed in the preceding claim, **characterized in that** the decorative structure (17) is connected to the external wall (5) of the enclosure (3) by arms (9), possibly interconnected using bridges (11).

9. The perfume bottle as claimed in claim 7, **characterized in that** the decorative structure (17) is defined in the external wall (5) of the enclosure (3).

10. The perfume bottle as claimed in one of the preceding claims, **characterized in that** the decorative structure (17) comprises all or some of the following features:
- it advantageously extends over the entire periphery of the perfume bottle over all or part of the height of the perfume bottle; and/or
- it exhibits symmetry of revolution about the central enclosure (3) or about the central axis of the perfume bottle, or exhibits a shape that is asymmetrical around the central enclosure (3); and/or
- it exhibits a cellular or honeycomb or alveolar structure; and/or
- it extends advantageously in at least one horizontal plane from the external wall (5) of the central enclosure (3) over a length greater than or equal to one quarter, or even greater than or equal to one third, or even greater than or equal to half, of the distance between the two opposite external walls (5) in the continuation of said length in the said horizontal plane; and/or
- it extends in this way over at least one third, or even at least half, or even at least three quarters, of the external surface (5) of the central enclosure (3).
